# EUROPEAN PATENT APPLICATION

(11) **EP 1 816 493 A1**
(43) Date of publication of application: **08.08.2007**
(21) Application number: 06002411.4
(22) Date of filing: 07.02.2006
(51) Int. Cl.: G02B 5/18

(54) **Tunable diffraction grating**

(71) Applicant: ETH Zürich, 8092 Zürich (CH)
(72) Inventor: Aschwanden, Manuel, 8046 Zurich (CH)

(57) **Abstract**

The invention is directed to a tunable diffraction grating (1) with optically active elements (6) arranged at a distance (A) next to each other. The optically active elements (6) are displaceable relative to each other in a lateral direction (x,y) and mechanically interconnected to a layer (4), which is made out of a deformable material. A deformation of the layer (4) in a direction (z) in general perpendicular to the lateral direction (x,y) causes a change in the relative distance (A) of the optically active elements (6).

## Description

### FIELD OF THE INVENTION

The invention lies in the field of diffraction gratings, especially tunable diffraction gratings with a significant spectral tuning range.

### BACKGROUND OF THE INVENTION

A diffraction grating is an optical element that consists of a reflecting or transparent substrate whose surface contains fine, parallel grooves or rulings that are equally spaced. When light is incident on a diffraction grating, diffractive and mutual interference effects occur and light is reflected or transmitted in discrete directions called orders. Because of their dispersive properties, gratings are commonly used in monochromators and spectrometers. These devices were first manufactured by German physicist Joseph von Fraunhofer in 1821.

Diffraction gratings have been a research topic for many decades. At the beginning, the design and the functional principle of the gratings were of major interest. In recent years, tunable diffraction gratings became popular, which allow to modify their physical behavior. One of the major topics was how a large tuning range could be achieved. The intense research activities combined with new micromachining technologies resulted in several types of tunable diffraction gratings. Examples of these tunable diffraction gratings are different realizations of mechanically rotary gratings or tunable gratings based on comb drives (see A. Azzam Yasseen et al. "Diffraction Grating Scanners Using Polysilicon Micro-moters", IEEE Journal of selected topics in quantum electronics, Vol. 5, No. 1, January/February 1999). Although some of these gratings are employed in commercially successful products, they are often limited in their tuning range or require many expensive production steps.

Classical diffraction gratings are mostly based on non-deformable materials. Therefore it is impossible to change the shape of the gratings and the only possibility to tune the grating is by rotation, which is difficult to realize in microsystems. In recent years this problem was addressed and several attempts to solve it were undertaken. Tunable diffraction gratings based on comb drives or piezoelectric actuators were developed. Such devices require either high investments due to complicated production processes or achieve only relatively small tuning ranges. This is mainly due to the stiff materials that are used for the implementation of the grating.

Tunable diffraction gratings are known from prior art. One example of such a device is a diffraction grating which is based on polymer substrates (i.e. PDMS) and which changes it's shape due to thermal expansion (see Bartosz A. Grzybowski et al., "Thermally actuated interferometric sensors based on the thermal expansion of transparent elastomeric media", Review of Scientific Instruments, Vol. 70, No. 4, April 1999). The same researchers have developed another tunable diffraction grating, which is tuned by the application of an external mechanical pressure (see Bartosz A. Grzybowski et al., "Beam redirection and frequency filtering with transparent elastomeric diffractive elements", Applied Optics, Vol. 38, No. 14, 10 May 1999). The mechanical pressure is applied to a layer of polymer comprising a diffraction grating by two parallel glass plates.

Due to the function principle both solutions have the disadvantage that it is e.g. not possible to miniaturize them.

US2004/0109234 (US'234), by Tapani Levola, was published in 2004 and relates to an optical device for manipulating a light wave using a diffractive grating structure which is electrically deformable. The electrically tunable diffraction grating is based on the physical effect that at an interface of two materials with different dielectric constants a force occurs in the presence of an electric field. This effect is suggested to be used to tune the diffractive behavior of the grating.

US2002/0186928 (US'928), by Curtis Kevin, was published in 2002 and describes a tunable optical device for adding or dropping one or more channels in a wavelength division multiplexing communication system. The tunable optical device comprises one or more filters, wherein at least one filter comprises at least one elastomer and one or more gratings. The elastomer is a polymer that expands and contracts with a change in a voltage applied across the polymer or when a certain wavelength of light is diffracted from or transmitted through the polymer. This device consists of a holographic grating that is based on an alternating refractive index pattern. This grating is embodied within an elastomer that changes its thickness when a voltage is applied. One disadvantage is that the grating is based on a fixed pattern of alternating refractive indices.

US6930817 (US'817), by Srinivasan et al., was published in 2004 and discloses a variable modulator assembly which includes an active layer with a multiplicity of electrodes. A deformable layer is in operational contact to a first surface of the active layer. An electrode configuration with a plurality of electrodes is in operational contact to a second surface of the active layer. A controller is configured to selectively apply a variable signal to the selected electrodes of the electrode configuration. Application of the variable signal causes the deformable layer to reconfigure to an alternated shape having distinct peaks and valleys. The distance between the peaks and valleys being determined by the value of the applied variable signal. In an optical modulating method, a variable modulator assembly is positioned to receive light at the deformable layer from a light source. Activation of an electrode configuration by the controller generates a variable signal, causing electrostatic charges to deform the deformable layer into a pattern corresponding to the activated electrodes.

US6903872 (US'872), by Schrader, was published in 2002 and describes an electrically reconfigurable optical device based on the use of a layer of dielectric and transparent viscoelastic material opposing at least a first electrode structure. According to the invention the arrangement of the individual electrode zones in the first electrode structure in order to deform the viscoelastic layer complies with one of the following alternatives. According to the first alternative, the electrode zones of the first electrode structure are grouped into groups composed of two or more adjacent electrode zones and within each of said groups individual electrode zones are supplied each with a substantially different voltage. According to the second alternative, the electrode zones of the first electrode structure are substantially annular, elliptical, rectangular or polygonal closed-loop electrodes. The invention allows, for example, for creating electrically reconfigurable blazed gratings or Fresnel zone lenses.

### SUMMARY OF THE INVENTION

The invention is directed to a tunable diffraction grating. In general a diffraction grating according to the present invention comprises a deformable grating which is actuated by an actuator such that the period of the periodic grating structure (i.e. grooves) is adjustable. In a preferred embodiment this is achieved in that a deformable grating is interconnected directly or indirectly to a deformable substratum, e.g. an elastomer actuator. The deformation of the diffraction grating is related to the deformation of the substratum, mainly to the deformation which is achieved to a secondary lateral deformation related to a perpendicular primary deformation via the poisson's ratio of a given material.

A fundamental property of gratings is that the angle of deviation depends on the wavelength of the incident light. Therefore, a grating separates an incident light into its monochromatic components, i.e., it is dispersive. An incident light beam is spatially separated into its monochromatic components, producing a rainbow of colors under white light illumination. This is visually similar to the operation of a prism, although the mechanism is different.

Diffraction gratings are usually designated by their groove density expressed in grooves per millimeter. The dimension and period of the grooves must be in the order of the wavelength in question and the effect to be achieved. In optics where the use of gratings is most common, this typically corresponds to wavelengths between 380nm and 780 nm (this is the visible light range, other ranges such as e.g. 10 nm to 10 µm are possible too). The groove density typically varies between a few tens of grooves per millimeter to a few thousands. The shape of the periodic structure (grooves) determines the efficiency of the grating. E.g. a grating can be formed by linear grooves which have a triangular cross section or consist of round spheres. Alternatively a grating can be formed by a regular pattern of spherical or pyramidal shapes. Other shapes are possible.

The principle of diffraction is known for more than 100 years and there exist many commercially available diffractive elements (e.g. Zeiss, Thorlabs, Edmund Optics). Classical diffraction gratings are normally based on non-deformable materials. These materials make it impossible to change the shape of the gratings. Therefore the only possibility to tune these gratings is rotation.

State of the art diffraction gratings experience several limitations. One major problem is the fact that the diffraction gratings are not continuously tunable without employing a complicated macroscopic rotation mechanism or expensive and complicated microscopic mechanical actuator. One reason is the use of hard materials (such as silicium) in standard tunable gratings. The stiffness of these materials makes it impossible to significantly change the grating period.

The current invention overcomes this problem by the help of comparably soft materials such as elastomers although the making of diffraction gratings based on soft materials is not an in general new idea. There are several reports available which describe how a grating can be tuned by using heat or external pressure (e.g. Bartosz A. Grzybowski et al., "Thermally actuated interferometric sensors based on the thermal expansion of transparent elastomeric media", Review of Scientific Instruments, Vol. 70, No. 4, April 1999 or Bartosz A. Grzybowski et al., "Beam redirection and frequency filtering with transparent elastomeric diffractive elements", Applied Optics, Vol. 38, No. 14, 10 May 1999). However, from the prior art it is not known to tune a grating by using elastomer actuators, especially dielectric elastomer actuators. Electrical tuning has significant advantages compared to methods know from prior art: Tuning by heating or cooling is very slow; tuning by external pressure is difficult to integrate in small devices.

The combination of diffraction gratings and piezo-ceramics is also known from the prior art, but experiments have shown that such devices have only a limited optical tuning range. This is mainly due to the limited strain (<0.2%) that can be achieved with piezo-ceramics.

In a preferred embodiment the actuator and the grating are implemented in at least one deformable material. One advantage of such an implementation is a higher linear strain in grating period direction. This has the effect that the grating can achieve a large tuning range (about 150 times higher than any known implementations based on piezo-ceramic actuator materials). Further advantages of the present invention consist in that the manufacturing process is at a very low cost, simple and fast. In difference to previous systems which require several complicated micromachining processes (i.e. comb-drive driven tunable gratings), the production of a preferred embodiment of the invention requires relative inexpensive and commercially available materials such as PDMS (Polydimethylsiloxane, a widely used silicon-based organic polymer), Carbon Black or 3M VHB4910 Acrylic Elastomers and coating metals such as Au (Gold), Al (Aluminum) or ITO (Indium Tin Oxide), whereas this is only a selection of products. When relatively inflexible material is used e.g. as coating material, for electrodes, improved flexibility may be achieved by applying a special shape to the inflexible material such that at least in one direction an improved lateral flexibility is obtained. Good results are achieved by a wavy, concertina-fold like development which allows lateral deformation mainly due to bending. In a preferred embodiment the concertina-fold like development is a result of the grating itself. In a preferred embodiment a concertina-fold like layer has in an undeformed state a wavy cross-section with straight side walls which are interconnected by sharp edges or blends of a certain radius, or a sequence of interconnected semicircles.

### Differences to the prior art can be summarized as follows:

US'234 is based on the shape change of the grating blazes. In difference to US'234 the force generation in a preferred embodiment of the herein discussed invention bases on Coulomb attraction. The strength of the Coulomb force is significantly stronger than the force generated by a field having the same strength and acting upon an interface between substances having different dielectric properties as used in US'234.

US'928 uses holographic gratings and is based on a much more complicated production process. Compared to US'928, the current invention can be tuned over a wider spectral range. US'928 describes an electrically tunable optical filter which consists of a holographic grating that is based on an alternating refractive index pattern. This grating is embodied within an elastomer that changes its thickness when a voltage is applied. This of course changes the shape of the holographic grating and thus changes the filtered wavelength. A major difference of the herein discussed invention to US'928 is the fact that the grating of US'928 bases on a fixed pattern of alternating refractive indices. In the current invention the optical structure is preferably a blazed grating (ruled grating) which does not rely on a holographic grating, that depends on a pattern of alternating refractive indices. Additionally, it is clear that the herein discussed invention can be used for highly tunable mechanical systems that rely on deformable structures.

A further advantage of the herein discussed invention consists in that it can be miniaturized which is important e.g. to make displays with small pixels. Diffraction gratings have good diffractive properties (wavelength separation) down to 10 lines per diffraction grating. This means that theoretically, a resolution of 10x10 µm² can be achieved. A further advantage is that the mechanical impact is in plane (not as in rotated grating structures).

A first embodiment of a tunable diffraction grating according to the present invention may be made by a procedure comprising the following steps:
1. Stretching of the EPAM base material on a frame.
2. Spraying/coating or contact printing of the compliant electrodes.
3. Bonding and molding of the diffraction grating onto the artificial muscle of step 1 and 2.
4. Optionally: Coating of the grating with a reflective material.

A second embodiment of a tunable diffraction grating according to the present invention may be made by a procedure comprising the following steps:
1. Molding of grating in elastomer.
2. Coating of diffraction grating with a conductive material.
3. Contact printing of ground electrode.
or
1. Coating of substrate with ground electrode material.
2. Spin-coating elastomer on ground electrode and substrate plus mold grating on elastomer.
3. Metal coating of grating.

In a preferred embodiment a diffraction grating is incorporated in or interconnected to an upper surface of a layer of deformable material, such as an elastomer, which acts as a substratum to carry and hold the grating in position. A secondary lateral deformation (in plane layer deformation), which determines the distance between the grooves of the grating, may be achieved in that the deformable material is deformed (compressed) in a primary direction perpendicular to its layer surface whereby the deformation ratio is determined by the poisson's ratio of the material. Depending on the utilized layer material and the shape and the support of the layer significant transmission ratios are achievable. Due to the reason that the lateral deformation is related to the poisson's ratio of a certain material it is relevant what layer materials are used. Good results are achieved by materials such as PDMS (Wacker Elastosil RT625) or 3M VHB tapes. PDMS typically has a poisson's ratio of 0.5 and VHB of 0.499.

A preferred way of generating the deformation in the primary direction is by coulomb forces. The layer of deformable material is arranged between an upper and a lower adjustable electrode which are in general arranged opposite to each other. By applying a voltage between the electrodes, the electrodes are attracted to each other by coulomb forces what results in that the layer of deformable material is compressed in the first direction (primary deformation) and expands in-plane in the lateral direction (secondary deformation). The deformation is implied by the poisson's ratio of the deformable material. The optically active elements of the diffraction grating are integrated or interconnected to the layer of deformable material such that the secondary deformation has an influence onto the periodic structure (periodicity of shape) of the diffraction grating. To not hinder this deformation the diffraction grating, respectively the electrode must be deformable itself up to a certain stage. This can be achieved in that it has a concertina-fold or sawtooth-like cross section which allows lateral deformation in at least one direction. At least the upper electrode must be made such that it does not influence the secondary lateral deformation negatively. This can be achieved in that the electrode itself has a cross-section which allows lateral deformation. Good results are achieved in that the upper electrode itself is made out of a relatively thin layer of conductive material which has a concertina-fold or sawtooth-like cross section. The upper electrode may be part of the diffraction grating itself. The upper electrode may be coated by an optically active coating. Alternatively or in addition the diffraction grating may comprise rigid optically active elements which are supported and linked such that their distance to each other is adjustable. E.g. the diffraction grating consists out of thin bands of conductive material (e.g. gold or an other metal) aligned next to each other and bonded directly or indirectly onto the layer of flexible material.

The deformable grating is mechanically coupled to a linear actuator which influences the distance between the means defining the grid. Good results are achieved by materials which deform when a voltage is applied, such as dielectric elastomers or other types of so called artificial muscles. If appropriate the deformable diffraction grating may be integrated directly into a surface of a dielectric elastomer actuator. By applying a voltage to the dielectric elastomer the diffraction grating is laterally deformed such that the distances between the grooves of the grid are changed and thereby the optical characteristics are modified.

A tunable diffraction grating according to the present invention may be applied in many fields of technology such as for displays, light sources or in communication systems where light needs to be switched between different channels. The invention has the potential for many commercial applications because of simple and inexpensive production and the significant tuning range that can be achieved with the proposed device. One possibility is the use as beam expander, e.g. for virtual display devices similar to the application described in US pat. 2004109234. It can also be used as monochromatic light source. When white light is shone onto the grating, light is split up into its monochromatic components. This monochromatic light can be used in display devices. One advantage of such displays is that the displayed colors are not limited to the color gamut of state of the art display devices.

Of course, the current invention has also the potential to be used in communication applications in which beam switching is required. One application is the use as tunable diffraction grating for optical systems. Furthermore the tunable diffraction grating may be used as laboratory equipment for investigating the behavior of different systems (biological systems) when exposed to shape changing gratings/structures. A diffraction grating according to the present invention may be applied e.g. in hand-held computers, personal digital assistants devices (PDA), mobile phones, digital video, cameras or any device that uses highly tunable diffraction gratings.

Good results are achieved by electroactive polymers which are used as actuators. Electroactive polymers are polymers whose shape is modified when a voltage is applied to them. Actuators comprising piezoelectric ceramics or shape memory alloys are well known and applied in several devices. In the last decade new types of actuators based on electroactive polymers (EAP) drew increasing attention. EAPs are promising because they have in a certain range likewise properties as natural muscles. This makes them very interesting for robotic applications where mammal movement is imitated. This is also the reason why EAPs are often called artificial muscles. Today known EAPs can produce strains up to 380%. EAPs generally may be divided in two different classes.

A first class of EAPs can be summarized as dielectric electroactive polymers (DEAP) wherein actuation is caused by electrostatic forces between electrodes. The electrodes are in general arranged opposite to each other on either side of a deformable polymeric material. When voltage is applied the opposite electrodes are attracted to each other and the in-between the electrodes arranged polymeric material is compressed. Due to poisson's ratio the compressed material expands in a perpendicular direction (lateral direction). This kind of electroactive polymers is characterized by a relatively large actuation voltage and comparable low electrical power consumption. To reduce hindering stresses it is advantageous that the electrodes are made deformable. A second class of electroactive polymers are ionic electroactive polymers. In this class deformation is caused by the displacement of ions inside the polymer. Only a relative low voltage is needed for actuation, but due to ionic flow a higher electrical power is needed.

In a preferred embodiment the substratum comprises a dielectric elastomer actuator with distinct lateral contraction behavior. Such elastomers are also known as artificial muscles. The gratings may be interconnected to, e.g. by bonding, or integrated into a controllably deformable surface of such a dielectric elastomer actuator. The grating is deformed in relation to the substratum.

An embodiment of the invention comprises a tunable diffraction grating with optically active elements which are arranged at a distance displaceable relative to each other in a second lateral direction. The optically active elements are mechanically interconnected to a layer made out of a deformable material, whereby a deformation of the layer in a first direction, which is in general perpendicular to the second lateral direction, causes a change in the relative distance and/or the periodic structure of the optically active elements. The lateral deformation is normally related to the first deformation via the poisson's ratio of the layer material. In a preferred embodiment the layer made out of deformable material is arranged in-between an upper and a lower electrode which compress the layer by coulomb forces when a voltage is applied between the electrodes. In general the length of the upper electrode is adjustable in at least one lateral direction and the upper electrode is mechanically interconnected to the layer such that a deformation of the layer results in a lateral deformation of the upper electrode in the lateral direction. Depending on the field of application the optically active elements may have a sawtooth, s-shaped or v-shaped cross-section, however, other shapes are also possible, e.g. the optically active elements consist out of thin stripes of material arranged laterally next to each other and supported by a substratum made out of deformable material such that their relative distance is adjustable. If appropriate the thin stripes of material may act as electrodes. The optically active elements may comprise pyramidal or spherical shaped elements and may be supported by a substratum made out of deformable material such that their relative distance is adjustable. A further embodiment may comprise an array of tunable diffraction gratings as described herein.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: A first embodiment of a tunable diffraction grating;
- Fig. 2: The diffraction grating according to Figure 1 in a deformed state;
- Fig. 3: A first diagram showing the relation between the applied voltage and the diffraction angle;
- Fig. 4: A second diagram showing the relation between the applied voltage and the diffraction wave-length;
- Fig. 5: Photographs of the effect of a diffraction grating according to the present invention;
- Fig. 6: A second embodiment of a diffraction grating according to the present invention;
- Fig. 7: The diffraction grating according to Figure 6 in a deformed state for low voltage;
- Fig. 8: The diffraction grating according to Figure 6 in a deformed state for high voltages;
- Fig. 9: A CIE chromaticity diagram;
- Fig. 10: A third embodiment of a diffraction grating according to the present invention;
- Fig. 11: The diffraction grating according to figure 10 in a deformed state;
- Fig. 12: A segmented diffraction grating according to the present invention;
- Fig. 13: The diffraction grating according to Figure 12 in a partially deformed manner;
- Fig. 14: A further embodiment of a tunable diffraction grating;
- Fig. 15: The tunable diffraction grating according to Figure 14 in a deformable state.

### DETAILED DESCRIPTION OF THE PREFERRED EMBODIMENTS

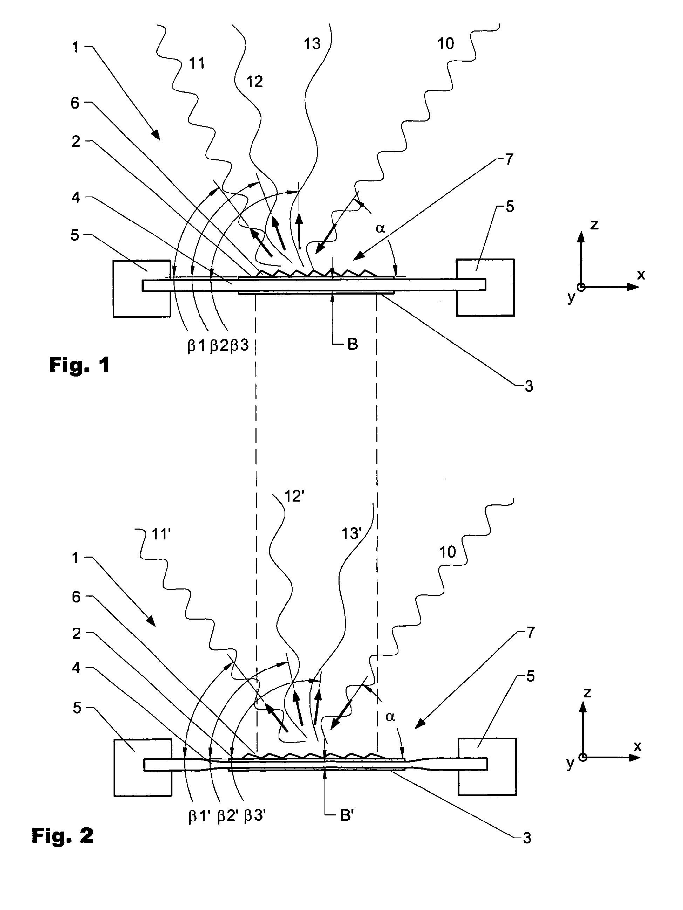

**Figure 1** schematically shows a first embodiment of a tunable diffraction grating 1 according to the present invention in an undeformed state (V = 0). The diffraction grating comprises an upper and a lower electrode 2, 3 which encompass an intermediate layer 4 made out of a deformable material, preferably an elastomer material. The intermediate layer 4 is held in position by a support 5. At least the upper electrode 3 is also made out of a deformable material such that it can deform in lateral direction along with the intermediate layer 4. The intermediate layer 4 and at least the upper electrode 2 are mechanically coupled to each other such that a secondary lateral deformation in xy-plane of the intermediate layer 4 causes a lateral deformation of the upper electrode 2 in the same direction.

When a voltage (V ≠ 0) is applied to the dielectric elastomer actuator the upper and the lower electrodes 2, 3 attract each other due to electrostatic forces (Coulomb forces). This results in a change (reduction) of the thickness B' of the intermediate layer 4 as visible in **Figure 2**. As a consequence the intermediate layer 4 expands laterally, whereby the volume of the elastomer remains in general constant. The expansion lateral direction (x-plane) is then transferred to optically active elements 6 which are arranged next to each other forming a grating 7. The optically active elements 6 are arranged such that their relative distance A is adjustable (A'). In the herein shown embodiment the intermediate layer 4 acts as substratum to hold the grating 7 in place. The expansion of the grating changes the blaze distance and the blaze angle. Thus the diffractive properties of the grating are controlled by an electric signal. An implementation of the grating substrate and the actuator in soft, flexible materials (i.e. polymers or acrylic materials) results in a large linear strain that allows a large change of the grating shape. This gives the possibility of a significant optical tuning range.

First embodiment as shown in **Figure 1** has been implemented with the following properties: Intermediate layer 4 made out of 3M VHB491 0 Acrylic Elastomer Tape stretched in both horizontal directions by 400%, appr. film thickness in the range of 40 µm. Upper and lower electrodes 2, 3: Ketjenblack powder contact printed onto the 3M Acrylic Elastomer (electrode area: 1 mm x 1mm). Optically active elements 6: Ca. 17 µm thick PDMS layer bonded to the upper electrode 2 comprising a grating of 1200 lines per mm. Support 5: Frame made out of P-MMA. **Figure 2** shows the diffraction grating 1 according to Figure 1. By applying a voltage between the upper and the lower electrode 2, 3 the upper and the lower electrode are attracted due to Coulomb force and the intermediate layer is compressed (z-direction). In **Figures 1** and **2** a first s-shaped line 10 schematically display an incident light and a second, third and a forth s-shaped line 11, 12, 13 (resp. 11', 12', 13' in Figure 2) are schematically indicating the radiation of light of different wave-length at different angles a, β1, β2, β3, resp. β1', β2', β3' in Figure 2, depending on the condition of the optically active elements 6 of the diffraction grating 1.

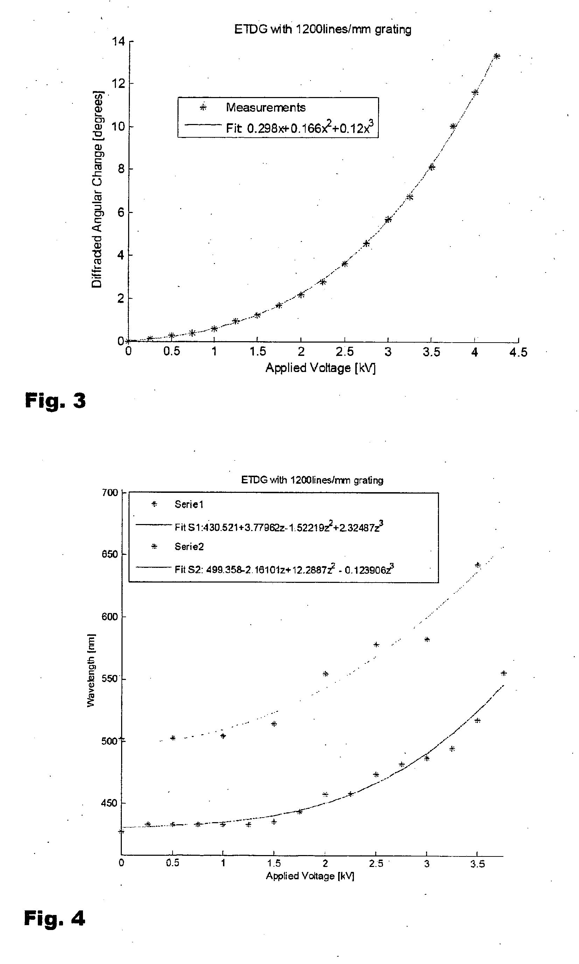

**Figure 3** is showing the relation between applied voltage and the diffracted angular change of a tunable grating according to the present invention. When monochromatic light is shone perpendicular onto the electrically tunable diffraction grating, the diffraction angle of the diffracted maxima can be measured. When a voltage is applied, the diffraction angles change. The angular change of the first maxima is called the diffracted angular change.

In the shown example the angular change is almost 14 degrees for a voltage difference of 4.5 kV. The necessary voltage can be reduced by using thinner film thicknesses. Actuators with drive voltages of 200V were developed by the inventor. The diffracted angular change is about 150 times higher than reported values for similar analog tunable diffraction gratings based on piezoelectric ceramics.

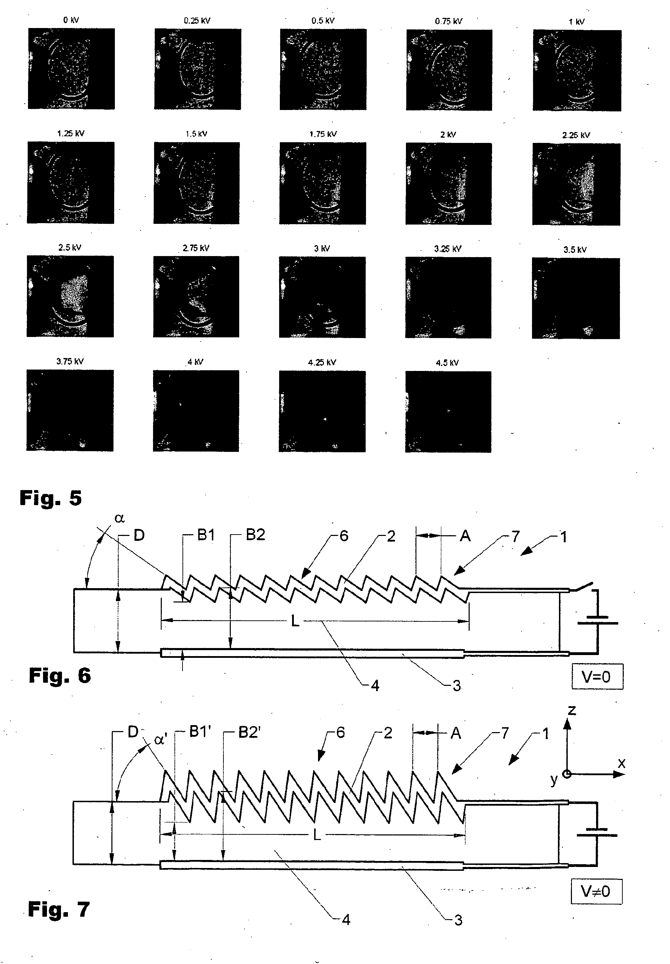

**Figure 4** shows the change of the wavelength in function of the applied voltage. White light was directed perpendicular onto the surface of a tunable diffraction grating according to the present invention. A wavelength analyzer was placed at a diffraction maximum. When the voltage is changed, the wavelength recorded by the wavelength analyzer changes over a range of more than 160 nm.

**Figure 5** shows photographs of a diffraction grating according to the present invention from above. A linear actuator as described along with figure 1 is located in the areas marked by circles. The voltage applied is indicated above each picture.

**Figures 6, 7** and **8** are showing a further embodiment of a tunable diffraction grating 1 according to the present invention. The optically active elements 6 of a grating 7 are integrated into an upper surface 8 of an upper electrode 2. This means that the top electrode 2 (Grating Electrode) is not only used to enable electrostatic attraction (forces) between the electrodes 2, 3 but it also contains the diffraction grating 7 itself (in the shown implementation it is a blazed grating but also other grating designs are possible). Between the upper and the lower electrodes 2, 3 an intermediate layer 4 is arranged which acts as support for the electrodes 2, 3. The intermediate layer 4 is made out of a deformable material. Due to the concertina-fold like cross-section of the upper electrode 2 the electrode is able to laterally expand in x-direction.

When a voltage V is applied between the electrodes 2, 3 (see **Figure 7**), the shape of the diffraction grating 7 changes due to coulomb attraction between the positive and negative charges on the electrodes 2, 3. In case of a blazed grating the change can have two physical reasons. When the upper electrode 2 has an in general sawtooth-like cross-section, the first physical effect is mainly a function of the locally changing distance B1, B2 between the upper and the lower electrode 2, 3 and thereto related local change in attraction forces. The electrostatic attraction between the grating valleys (B1) of the upper electrode 2 and the lower electrode 3 is stronger than between the grating peaks (B2) of the upper electrode 2 and the lower electrode 3. This causes the blaze angle (α to α') to increase as schematically inidicated in **Figure 7**. When the first physical effect occurs only a relatively small local deformation of intermediate layer 4 occurs and the overall dimensions such as length (L) and thickness (D) do not significantly change.

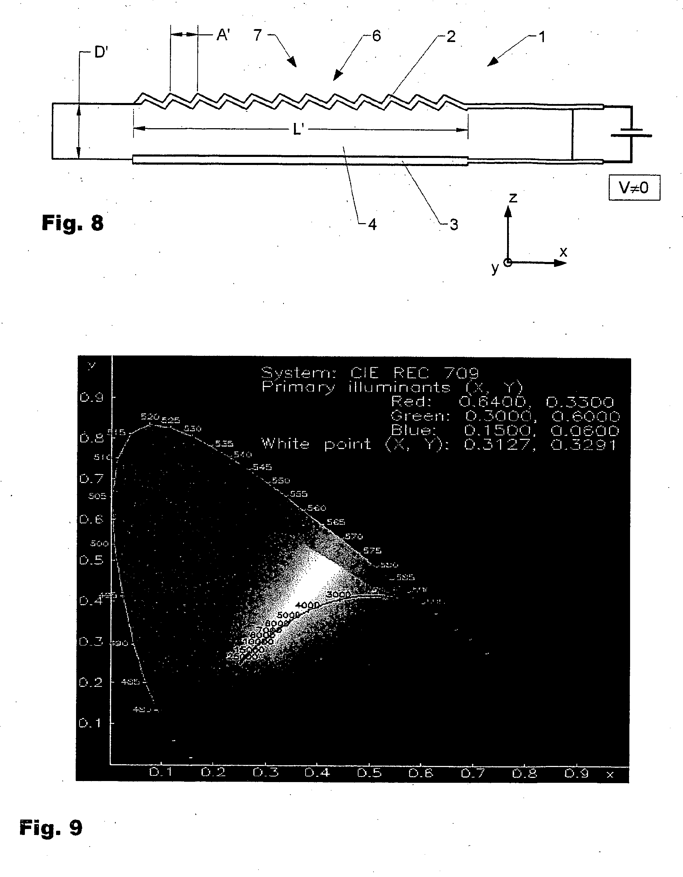

The second physical effect is schematically displayed in **Figure 8.** The linear expansion L to L' (x-direction) of the intermediate layer 4 results out of the vertical compression D to D' of the layer 4 (z-direction) by the electrodes 2, 3 and is given by the poisson's ratio of the material. In that the diffraction grating is interconnected to the intermediate layer 4, the lateral deformation of the intermediate layer 4 is transmitted onto the diffraction grating 7 such that the distance A (see Figure 6) of the optically active elements 6 changes (A'). Depending on the exact implementation and the strength of the applied voltage V, one or both effects affect the tuning property of the diffraction grating 1.

Exemplified implementations of embodiments which are based on the second physical effect may be based on PDMS (Elastosil RT625 by Wacker) as elastomer and Au, Al or ITO (for the operation as transmission diffraction grating) as electrode material. It has been shown that the tuning range of a tunable diffraction grating 1 according to the present invention achieves values which are out of the range of other micromachinable tunable diffractive devices as known from prior art.

As it can be seen from the example shown in **Figure 3,** the diffracted angular change is more than 0.2443 rad. The diffracted wavelength which determines the visible color that can be seen at a fixed observation location, e.g. perpendicular to the surface of the device shown in Figure 5 can be tuned over 160 nm.

**Figure 9** shows the CIE chromaticity diagram. One advantage of a tunable diffraction grading according to the herein disclosed invention consists in that e.g. the colors displayable by a display made out of an array of tunable diffraction gratings according to the present invention would not be limited to the color gamut (triangle) of the state of the art display devices.

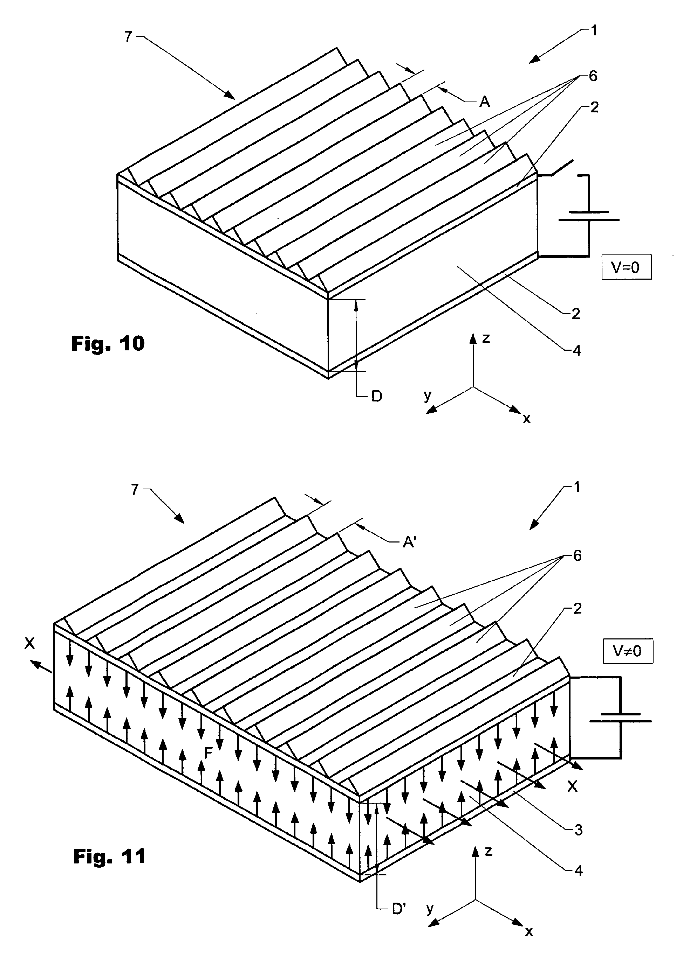

**Figures 10** and **11** are schematically showing a further embodiment of a tunable diffraction grating 1 according to the present invention. An intermediate layer 4 is arranged between an upper and a lower electrode 2, 3. Both electrodes 2, 3 are mechanically coupled to the intermediate layer 4 and laterally (x-direction) deformable along with the intermediate layer 4. Optically active elements 6 of a grating 7 are arranged on the upper electrode 2. The active elements 6 of the shown embodiment of the diffraction grating 1 have an in general lamellar shape and are arranged next to each other. The cross-section of the optically active elements 6 is in general triangular. Alternative shapes such as round or quadratic are depending on the field of application possible.

When a voltage V is applied a coulomb force F occurs between the upper and the lower electrode 2, 3 which causes a compression of the intermediate layer 4. Due to the compression the intermediate layer 4 expands, depending on the setup, laterally in at least one direction (here x-direction). The compression of the intermediate layer results in a reduction of thickness D to D'. The lateral expansion in x-direction is indicated by arrows X. Due to that the distance A between the optically active elements 6 changes (schematically indicated by A'). The distance of the optically active elements 6 of the shown embodiments mainly changes because of the elasticity of the upper electrode 2.

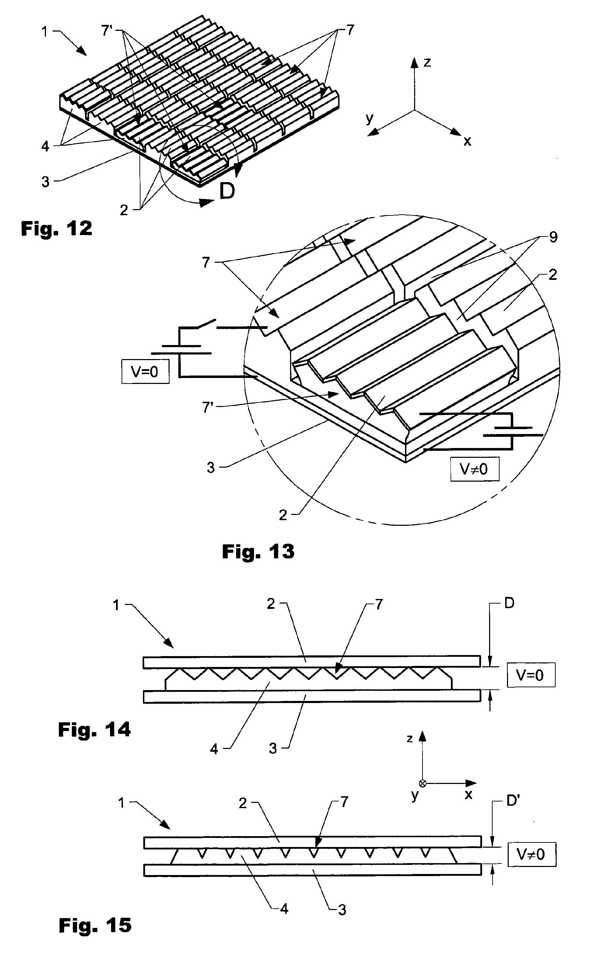

**Figure 12** is schematically showing a further embodiment of a tunable diffraction grating 1 according to the present invention and **Figure 13** is showing detail D of Figure 12 in a magnified manner. The tunable diffraction grating 1 of this embodiment comprises an array of gratings 7 which may be activated individually if appropriate (schematically indicated by three deformed pixels 7'). The gratings 7 are distanced to each other by gaps 9. The shown embodiment may be used e.g. in a display device where a multiplicity of pixels is necessary to display graphics or readable information. Because the present invention offers the possibility to miniaturize, the gratings 7 may be made very small, such as e.g. 10 µm. Each individual grating 7 comprises a single upper electrode 2 which is arranged on an in general mushroom-like intermediate layer 4. The intermediate layers 4 are interconnected by a lower electrode 3. **Figure 13** shows a Detail D of Figure 12 in a magnified manner. A deformed pixel 7' is visible beside undeformed pixels 7. The deformation is caused by the applied voltage V in general similar as described in connection with the previous embodiments of the invention such that it is not repeated again.

**Figure 14** and **15** are showing a further embodiment of a diffraction grating according to the present invention. **Figure 14** shows the grating in undeformed and **Figure 15** in deformed status. An elastomeric (i.e. PDMS) grating 7 is placed between two electrodes 2, 3 (i.e. ITO). The elastomeric grating 7 simultaneously acts as intermediate layer 4. When a voltage is applied, the intermediate layer 4 is compressed (indicated by reduction of thickness D to D'). In a directly connected second expansion, the grating blades 6 deforms/expands in the second direction (x, y) which causes a change the blade angle such that the diffraction property of the diffraction grating 1 change.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A tunable diffraction grating (1) with optically active elements (5) arranged at a distance (A) displaceable relative to each other in a second lateral direction (x, y) and mechanically interconnected to a layer (4) made out of a deformable material, whereby a deformation of the layer (4) in a first direction (z) in general perpendicular to said second lateral direction (x, y) causes a change in the relative distance (A) and or periodic structure of at least two optically active elements (5).

2. The tunable diffraction grating (1) according to claim 1, wherein the lateral deformation (x, y) is related to the first deformation (z) via a poisson's ratio of the layer material (4).

3. The tunable diffraction grating (1) according to one of the previous claims, wherein the layer (4) made out of deformable material is arranged in-between an upper and a lower electrode (2, 3) which compress the layer (4) when a voltage is applied between the electrodes (2, 3).

4. The tunable diffraction grating (1) according to claim 3, wherein the length of the upper electrode (2) is adjustable in at least one lateral direction (x, y) and the upper electrode (2) is mechanically interconnected to the layer (4) such that a deformation of the layer (4) results in a lateral deformation of the upper electrode (2) in the at least one lateral direction (x, y).

5. The tunable diffraction grating (1) according to one of the previous claims, wherein the optically active elements have a sawtooth, s-shaped or v-shaped cross-section.

6. The tunable diffraction grating (1) according to one of the claims 1 to 4, wherein the optically active elements (5) consist out of thin stripes of material arranged laterally next to each other and supported by a substratum made out of deformable material such that their relative distance is adjustable.

7. The tunable diffraction grating (1) according to claim 6, wherein the thin stripes of material act as electrodes (2).

8. The tunable diffraction grating (1) according to one of the claims 1 to 4, **wherein** the optically active elements comprise pyramidal or spherical shaped elements and supported by a substratum made out of deformable material such that their relative distance is adjustable.

9. A device comprising an array of tunable diffraction gratings (1) according to one of the previous claims.

10. A first method for making of a tunable diffraction grating comprising the following steps:
a) Stretching of a layer material in at least one lateral direction and fixing it on a frame 5;
b) Coating the layer material 4 at least partially with an upper and a lower electrode 2, 3;
c) Bonding optically active elements 6 to at least one electrode.

11. A second method for making of a tunable diffraction grating comprising the following steps:
a) Implementing of an array of optically active elements (5) in a layer of deformable elastomer material to form a diffraction grating;
b) Coating of the diffraction grating by a coating of conductive material to form an upper electrode;
c) Applying of a lower electrode (3) to the layer (4) opposite to the upper electrode (2).

12. A third method for making of a tunable diffraction grating comprising the following steps:
a) Coating of intermediate layer material (4) with a ground electrode material (2, 3);
b) Spin-coating elastomer material on ground electrode and substrate;
c) Bonding optically active elements 6 to at least one electrode;
d) Metal coating of grating.
